# FASCICULE DE BREVET EUROPEEN

(11) **EP 1 463 319 B1**
(45) Date de publication et mention de la délivrance du brevet: **07.01.2009**
(21) Numéro de dépôt: 04100932.5
(22) Date de dépôt: 08.03.2004
(51) Int. Cl.: H04N 7/16

(54) **Procédé d'accès à des services de télévision au moyen d'un décodeur esclave**
Verfahren für den Zugriff auf Fernsehdienste mittels eines Nebendekoders
Method for accessing television services using a slave decoder

(30) Priorité: 19.03.2003 FR 0350053
(43) Date de publication de la demande: 29.09.2004
(73) Titulaire: Sagem Communications, 75512 Paris (FR)
(72) Inventeur: Grosset, Gilles, 95520, Osny (FR); Chevreul, Jean-Jacques, 78360, Montesson (FR)
(74) Mandataire: Camus, Olivier Jean-Claude

(56) Documents cités:
- WO-A-97/35430
- FR-A- 2 779 599
- US-A- 5 060 079
- US-A- 5 331 353
- US-A1- 2003 028 886

## Description

### DOMAINE TECHNIQUE DE L'INVENTION

La présente invention a pour objet un procédé d'accès à des services de télévision au moyen d'un décodeur esclave. Elle permet de définir et de contrôler des conditions particulières d'utilisation d'un décodeur esclave, c'est à dire d'un décodeur dont le fonctionnement dépend, au moins pour certaines de ses fonctionnalités, d'un autre décodeur, appelé décodeur maître.

Le domaine de l'invention est, d'une façon générale, celui de la télévision numérique. Dans ce domaine, on associe le plus souvent au téléviseur un décodeur de télévision numérique. Ce dernier offre la possibilité à un abonné de recevoir une multitude de programmes, ou services, de télévision. L'abonné a préalablement acheté ou loué le décodeur à un opérateur de télévision, ou à un intermédiaire, et a souscrit un abonnement qui lui permet de recevoir et visualiser un ensemble de services de télévision cryptés. Cet ensemble de services dépend de la nature de l'abonnement que l'utilisateur a choisi, et il n'inclut pas nécessairement tous les services de télévision disponibles chez l'opérateur choisi.

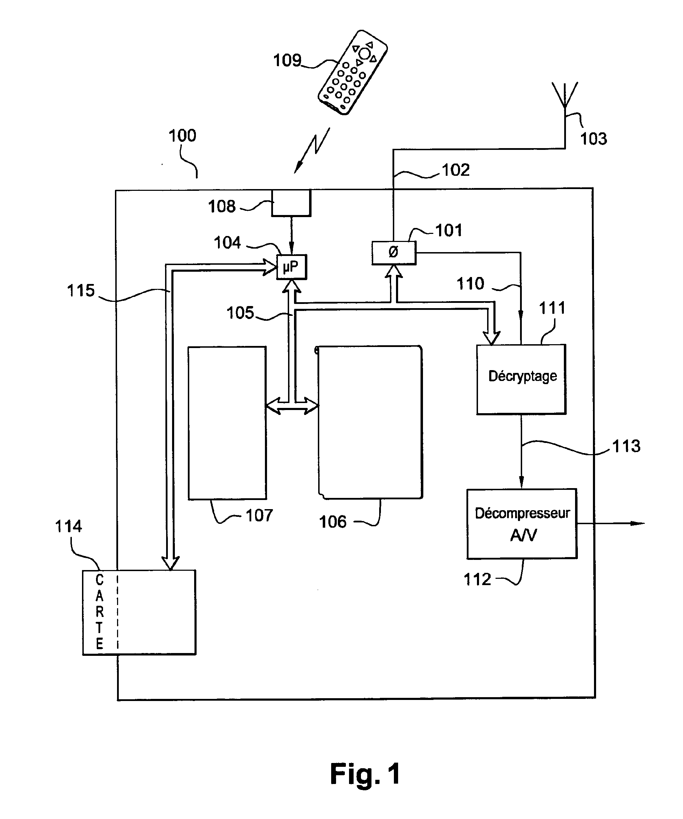

Un décodeur basique de l'état de la technique est représenté de façon schématique à la figure 1. Cette figure montre un décodeur 100 qui comporte un module de réception 101 d'un flux de signaux de télévision émis par un ou plusieurs opérateurs de télévision. Le module de réception 101 incorpore notamment des moyens de démultiplexage des différents signaux reçus dans le flux. Il peut, dans certains cas, également comporter des éléments compatibles avec un système de contrôle des éléments périphériques. Il est relié, au moyen d'un câble radio fréquence 102, dit câble RF, à des moyens de réception 103, symbolisés par une antenne. Dans la pratique, les moyens de réception 103 associés au décodeur 100 peuvent être un dispositif de réception terrestre, un dispositif de réception par câble, ou encore un dispositif de réception par satellite. Outre le câble RF, le décodeur 100 dispose de différentes possibilités de raccordement, non représentées, avec son voisinage: on trouve notamment un câble secteur, un câble péritel, un connecteur rendant possible un raccordement à un réseau téléphonique, essentiellement pour avoir accès à des services interactifs...

Un microprocesseur 104 est relié au moyen d'un premier bus de communication bidirectionnel 105 à une mémoire de programmes 106, à une mémoire de données 107, à un module de décryptage 111 et au module de réception 101. Le microprocesseur 104 indique au module de réception 101 notamment quel service de télévision il doit extraire du flux d'informations qu'il reçoit par les moyens de réception 103. Un capteur 108, dans cet exemple infrarouge, reçoit des signaux émis par une télécommande 109. Une cellule infrarouge du capteur 108 délivre un signal qui est transmis au microprocesseur 104. Les signaux numériques issus du module de réception 101 sont envoyés, via une première liaison unidirectionnelle 110 vers le module de décryptage 111. Les signaux, éventuellement décryptés sont ensuite transmis vers un décompresseur audio/vidéo 112 via une deuxième liaison unidirectionnelle 113.

La mémoire de données 107 est notamment destinée à mémoriser différentes informations, valeurs ou paramètres nécessaires au fonctionnement du décodeur. La mémoire de programmes 106 est notamment destinée à la gestion des différentes opérations à exécuter pour mettre en oeuvre différentes fonctionnalités du décodeur. Elle comporte plusieurs applications, et pourra notamment en contenir certaines qui seront dédiées à la mise en oeuvre du procédé selon l'invention. Ces applications seront détaillées par la suite. Dans d'autres exemples de réalisation du décodeur 100, ces applications pourraient être remplacées par des circuits électroniques spécifiques.

Le bus de communication bidirectionnel 105 véhicule des signaux de commande, d'adresse ou de données. Il s'agit d'une représentation fonctionnelle ; toutes les autres liaisons représentées sont, dans la pratique, des bus de données qui assurent des échanges de données entre deux éléments du décodeur décrit. Certaines de ces liaisons pourraient être intégrées dans le bus de communication bidirectionnel 105.

Dans le décodeur 100, on a prévu une ouverture pour introduire une carte 114, par exemple une carte de type carte à puce. Le décodeur est équipé d'une interface pour pouvoir échanger des informations avec la carte 114 via un deuxième bus de communication bidirectionnel 115. La carte 114 est un élément essentiel dans le fonctionnement de la gestion des droits d'accès aux services de télévision. A cet effet, une telle carte comporte notamment différentes mémoires contenant différentes clés de décryptage et un ensemble d'informations relatives à des droits d'accès. Le module de décryptage 111 reçoit des messages de décryptage depuis la carte 114 et via les différents bus de communication du décodeur 100 qui permettent, lorsque l'abonnement d'un utilisateur comprend un service sélectionné, de décrypter les signaux audio et vidéo de ce service.

### ARRIERE-PLAN TECHNOLOGIQUE DE L'INVENTION

Actuellement, lorsqu'un abonné souhaite souscrire un deuxième abonnement, et donc utiliser un deuxième décodeur de télévision numérique, il ne bénéficie pas généralement de tarifs avantageux de la part de l'opérateur auprès duquel il a souscrit son premier abonnement. Or il apparaît aujourd'hui qu'une proportion non négligeable des clients des opérateurs de télévision, qui ont souscrit un premier abonnement, dit abonnement principal, serait prête à souscrire un second abonnement, dit abonnement annexe, si ce dernier était proposé à un tarif avantageux par rapport au premier. Un double abonnement leur permettrait en effet de disposer de droits d'accès - éventuellement différents- pour plusieurs décodeurs de télévision qui, s'ils sont placés dans différentes pièces d'une habitation, permettraient à différentes personnes de l'habitation de visualiser simultanément des services de télévision payante différents.

Une des difficultés à laquelle se trouvent confrontés les différents opérateurs de télévision pour proposer des abonnements annexes à un abonnement principal à un tarif préférentiel est qu'ils doivent avoir la garantie que le décodeur esclave qu'ils mettent à disposition d'un abonné sera effectivement utilisé en tant que décodeur esclave, c'est à dire dans une habitation dans laquelle un décodeur maître est licitement utilisé. En effet, il ne serait économiquement pas viable de mettre à disposition du public des décodeurs bénéficiant d'un abonnement à tarif préférentiel si de tels décodeurs pouvaient être utilisés par une personne n'ayant pas déjà souscrit un abonnement.

Dans l'état de la technique, on connaît la demande de brevet Européen EP 0 726 676 déposée par Philips Electronics, qui apporte un début de solution au problème qui vient d'être soulevé. Dans ce document, on prévoit que, pour obtenir des droits d'accès, une carte de gestion des droits d'accès du décodeur esclave doit régulièrement être placée, par un abonné, dans le décodeur maître associé au décodeur esclave pour que les droits d'accès du décodeur esclave soient inscrits. Un tel fonctionnement est, en fonction de la fréquence imposée pour l'inscription des droits sur la carte de gestion des droits d'accès, soit contraignant pour l'abonné, le fait de recharger souvent la carte de contrôle devenant rapidement lassant, soit insuffisamment sécurisé, un utilisateur ami de l'abonné principal pouvant parfaitement venir recharger sa carte chez l'abonné principal aussi souvent que nécessaire, pour autant que la périodicité de rechargement maximum ne soit pas trop faible.

On connaît aussi, dans l'état de la technique, le brevet américain US-A-4633309, qui propose un système dans lequel un opérateur de télévision émet périodiquement un message d'inhibition de droits vers l'ensemble des décodeurs esclaves de son parc, tout en ayant préalablement transmis à l'ensemble des décodeurs maîtres un message dit message antidote ; le message antidote aura été immédiatement, ou tout au moins avant que le message d'inhibition ne soit émis par l'opérateur, redistribué par chaque décodeur maître vers chaque décodeur esclave auquel il a été associé. Les décodeurs esclaves ayant reçu le message antidote ne sont ainsi pas affectés par le message d'inhibition émis par l'opérateur, et ils peuvent continuer à bénéficier des différents droits d'accès qui leur ont été attribués lors de la souscription d'un abonnement dont les conditions sont réservées à l'utilisation d'un décodeur esclave coopérant avec un décodeur maître. Cependant, cette solution n'est pas satisfaisante car elle nécessite une intervention régulière de l'opérateur de télévision, qui doit intégrer périodiquement dans son flux de signaux des messages d'inhibition et des messages antidotes.

On connaît aussi, dans l'état de la technique, le document US 2003/002886 A1 qui divulgue un dispositif d'accès, pour un unique abonné, à une multitude de décodeurs.

On connaît également, dans l'état de la technique, le document JP2000-324465 qui est une demande de brevet déposée par SONY. Dans ce document, un décodeur maître transmet à un décodeur esclave qui lui est associé une clé de déchiffrement. Cette transmission est effectuée lors de la en marche. Il faut donc équiper le décodeur esclave et le décodeur maître de moyens bidirectionnels de communication pour qu'ils puissent échanger entre eux un ensemble d'informations. Un tel équipement est contraignant et coûteux à mettre en place. Par ailleurs, la clé de déchiffrement qui est transmise s'apparente à des droits d'accès qui sont donnés au décodeur esclave ; après la mise sous tension du décodeur esclave et une fois les droits mémorisés, rien n'empêche un abonné de partir avec le décodeur maître vers une autre habitation pour transmettre les mêmes droits à un autre décodeur esclave.

### DESCRIPTION GENERALE DE L'INVENTION

La présente invention propose une solution à tous les problèmes et inconvénients qui viennent d'être mentionnés. Dans l'invention, on propose une solution particulière qui rend impossible l'usage d'un décodeur esclave qui ne serait pas utilisé à proximité d'un décodeur maître. Un avantage significatif du procédé selon l'invention est que sa mise en oeuvre ne nécessite pas de modifications importantes ni dans les décodeurs intervenant dans ledit procédé, qu'ils soient maîtres ou esclaves, ni dans le contenu des flux de signaux diffusés par les différents opérateurs de télévision.

A cet effet, on prévoit dans l'invention, un fonctionnement particulier de chaque décodeur esclave, fonctionnement selon lequel chaque décodeur esclave ne réalise plus d'opérations de décryptage lorsqu'il n'a pas reçu, depuis un certain temps, de messages spécifiques, dits messages d'autorisation, de la part du décodeur maître. Dans l'invention, le décodeur esclave est capable de se bloquer de lui-même en suspendant ses opérations de décryptage, sans recevoir d'instructions de blocage depuis l'extérieur, par exemple de l'opérateur ; il dispose d'un système d'horloge lui permettant de réaliser un compte à rebours.

Lorsque le compte à rebours du décodeur esclave arrive à son terme sans avoir été réinitialisé, c'est à dire sans avoir été repris depuis le début du compte à rebours, suite à l'absence de réception d'un message d'autorisation émanant du décodeur maître, l'esclave cesse toutes opérations de décryptage refusant ainsi l'accès aux programmes cryptés. Par ailleurs, les messages d'autorisation sont émis régulièrement par le décodeur maître, sans que ce dernier n'ait préalablement reçu, de l'extérieur, d'instructions spécifiques commandant une telle émission. La gestion des droits d'accès pour un décodeur esclave proposée dans le procédé selon l'invention est donc automatique et ne fait pas intervenir d'éléments extérieurs, tels que les opérateurs de télévision ou les utilisateurs des décodeurs, aux décodeurs concernés.

Dans un mode de mise en oeuvre avantageux du procédé selon l'invention, les décodeurs esclaves sont associés à un décodeur maître unique, c'est à dire qu'ils ne peuvent accepter de messages d'autorisation que de la part du décodeur maître qui leur a été affecté. A cet effet, les décodeurs esclaves et le décodeur maître auront fait l'objet d'une opération dite de pairing. Avantageusement, les messages d'autorisation sont transmis du décodeur maître vers chaque décodeur esclave destinataire du message via le câble RF.

L'invention concerne donc un procédé d'accès à des services de télévision au moyen d'au moins un décodeur esclave, ledit procédé comportant les différentes étapes consistant à :
- équiper une habitation au moyen d'un décodeur maître et d'au moins un décodeur esclave ;
- recevoir, via des moyens de réception de l'habitation, un flux de signaux de télévision émis par un opérateur de télévision, le flux comportant notamment un ensemble de services de télévision ;
- déterminer pour le décodeur maître, un ensemble de droits d'accès à un premier ensemble autorisé de services de télévision ;
caractérisé en ce que le procédé comporte les différentes étapes supplémentaires consistant à :
- transmettre automatiquement et régulièrement, depuis le décodeur maître vers chaque décodeur esclave, un message d'autorisation d'accès à un deuxième ensemble autorisé de services de télévision, ledit message d'autorisation étant élaboré au moyen d'une application du décodeur maître sans transmission préalable, par l'opérateur de télévision, d'un message spécifique déclenchant la transmission d'un tel message d'autorisation;
- bloquer une opération de décryptage du deuxième ensemble de services de télévision pour chaque décodeur esclave actif n'ayant pas reçu de message approprié d'autorisation pendant une durée d'autonomie, préalablement déterminée, des décodeurs esclaves.
- l'étape de blocage de l'opération de décryptage étant mise en oeuvre sans transmission préalable par l'opérateur de télévision d'un message spécifique déclenchant le blocage de l'opération de décryptage, par chaque décodeur esclave n'ayant pas reçu, pendant sa durée d'autonomie, le message d'autorisation ;
**caractérisé en ce que** le procédé comporte les différentes étapes supplémentaires consistant à :
- mémoriser (312 ; 313), avant chaque mise en veillé (314) d'un des décodeurs esclaves (100'), un état d'autorisation d'accès du décodeur esclave (100') ;
- à chaque nouveau positionnement dans un état actif (301) du décodeur esclave, placer (307) ledit décodeur esclave (100') dans un état d'autorisation d'accès correspondant à l'état d'autorisation d'accès mémorisé.

Le procédé selon l'invention peut avantageusement présenter une ou plusieurs caractéristiques supplémentaires parmi les suivantes :
- l'étape de blocage de l'opération de décryptage est mise en oeuvre sans transmission préalable par l'opérateur de télévision d'un message spécifique déclenchant le blocage de l'opération de décryptage, par chaque décodeur esclave n'ayant pas reçu, pendant sa durée d'autonomie, le message d'autorisation ;
- la transmission du message d'autorisation d'accès est périodique ;
- la transmission du message d'autorisation d'accès est effectuée via un câble RF reliant chaque décodeur aux moyens de réception de l'habitation ;
- la transmission du message d'autorisation d'accès est effectuée dans une bande de fréquence non utilisée pour la réception du flux de signaux de télévision ;
- la transmission du message d'autorisation d'accès est effectuée selon un protocole défini pour les systèmes de contrôle des équipements périphériques dans le cadre des réceptions satellites, par exemple le système DiSEqC ;
- la durée d'autonomie des décodeurs esclaves est supérieure à deux fois la période de transmission du message d'autorisation ;
- le procédé comporte l'étape supplémentaire consistant à associer le décodeur maître à chaque décodeur esclave de l'habitation. Cette association entre le décodeur maître et chaque décodeur esclave de l'habitation est irréversible au minimum sans intervention de l'opérateur ou du constructeur de décodeurs.

Dans un premier mode de mise en oeuvre, l'étape d'association d'un maître avec un esclave comporte les différentes opérations consistant à :
- calculer, dans le décodeur maître, une clé de chiffrement à partir d'aléas disponibles au sein du décodeur maître ;
- transmettre une clé de déchiffrement associée à la clé de chiffrement vers chaque décodeur esclave ;
- mémoriser la clé de chiffrement, respectivement la clé de déchiffrement dans une mémoire du décodeur maître, respectivement dans une mémoire de chaque décodeur esclave; l'opération de mémorisation de la clé de déchiffrement dans chaque décodeur esclave est dans un exemple avantageux, unique et irréversible.

Dans un second mode de mise en oeuvre, l'étape d'association d'un maître avec un esclave comporte les différentes opérations consistant à :
- recevoir, dans le décodeur maître et dans chaque décodeur esclave de l'habitation, un ou plusieurs messages spécifiques, de type EMM, comportant les clés de chiffrement et de déchiffrement ;
- mémoriser la clé de chiffrement dans une mémoire du décodeur maître et la clef de déchiffrement dans une mémoire du décodeur esclave.
   - le procédé comporte l'étape supplémentaire consistant à chiffrer, respectivement déchiffrer, au moyen de la clé de chiffrement, respectivement de déchiffrement, mémorisée, les messages d'autorisation transmis, respectivement reçus, par le décodeur maître, respectivement par chaque décodeur esclave.
   - le message d'autorisation d'accès (MESS.AUTO) chiffré comporte une information relative à l'instant de leur envoi.
   - l'étape de blocage d'une opération de décryptage est effectuée au moyen d'une carte de gestion des droits insérée dans chaque décodeur esclave.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation schématique d'un décodeur classique de l'état de la technique ;
- à la figure 2, une représentation schématique de deux décodeurs susceptibles de mettre en oeuvre le procédé selon l'invention pour la gestion des droits d'accès d'un décodeur esclave;
- à la figure 3, un organigramme illustrant différentes étapes d'un mode de mise en oeuvre particulier du procédé selon l'invention.

### DESCRIPTION DES FORMES DE REALISATION PREFEREES DE L'INVENTION

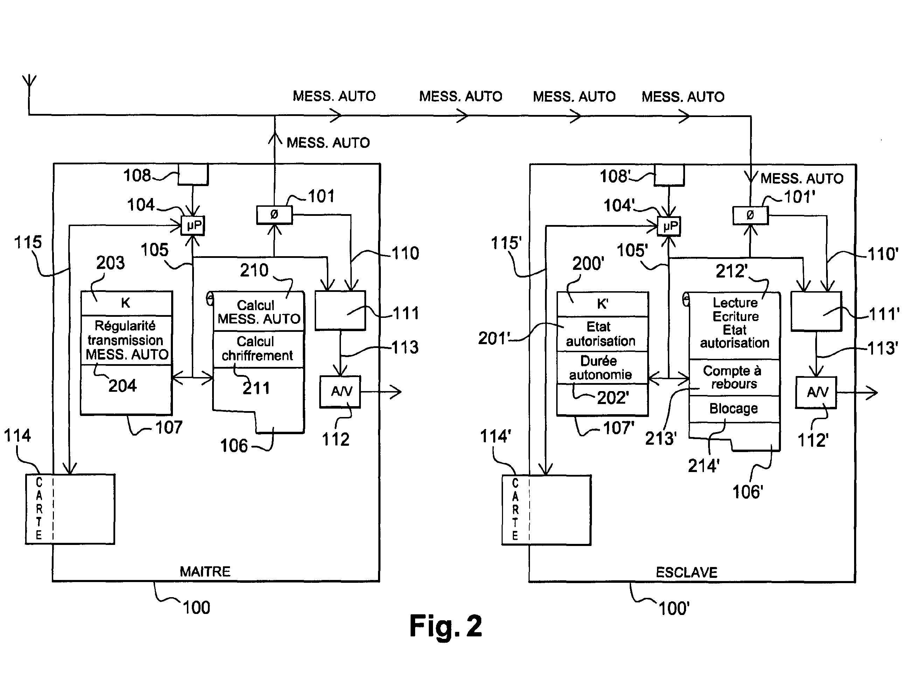

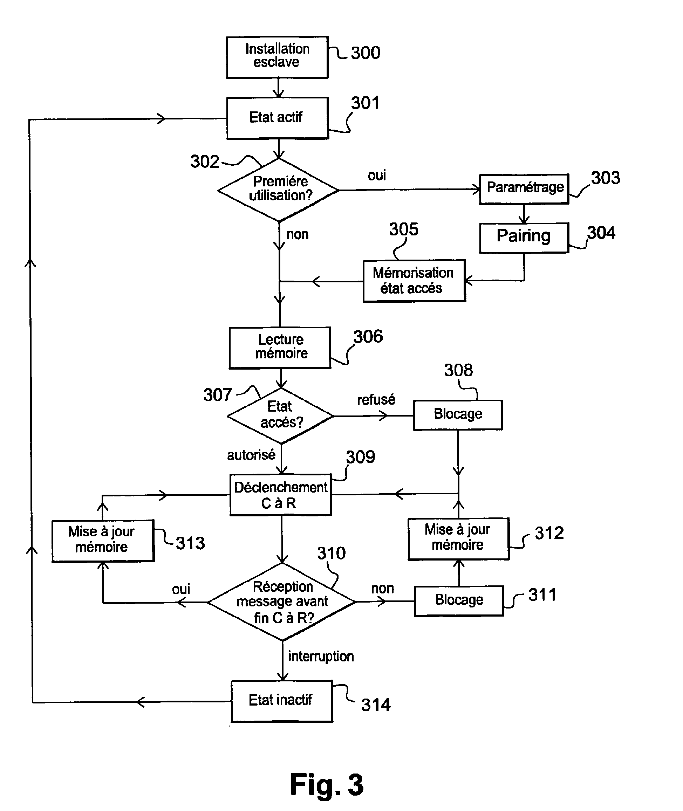

Il est désormais fait référence aux figures 2 et 3 qui illustrent une mise en oeuvre particulière de l'invention, plusieurs des étapes décrites ne devant en rien être considérées comme limitatives de la portée générale du procédé selon l'invention.

A la figure 2, on a représenté un premier décodeur 100, qui sera considéré comme le décodeur maître, et un deuxième décodeur 100', qui sera considéré comme le décodeur esclave. Ces deux décodeurs sont similaires, dans leur structure générale, à celui décrit à la figure 1 ; les différents éléments représentés ont gardé les mêmes références que celles données à la figure 1, l'extension "prime" ayant été ajoutée aux références du décodeur 100' pour éviter les confusions. Pour la mise en oeuvre du procédé selon l'invention, on a essentiellement adapté, par rapport aux décodeurs connus de l'état de la technique, le contenu des mémoires de programmes 106, 106' et les mémoires de données 107 et 107'. Les deux décodeurs sont reliés à des moyens de réception communs 103 au moyen de leur câble radio fréquence respectif 102 et 102'.

Dans l'invention, on propose avantageusement que les câbles radio-fréquence 102 et 102' soient utilisés pour que le décodeur maître 100 transmette des messages, notamment les messages d'autorisation, au décodeur esclave 100'. Dans des modes de mise en oeuvre différents de l'invention, d'autres moyens de transmission des messages d'autorisation entre les deux décodeurs peuvent être utilisés, ces moyens étant cependant moins appropriés :
- on peut prévoir une liaison physique supplémentaire entre les décodeurs ; cependant l'abonné aura le désagrément d'avoir un câble supplémentaire à faire passer d'une pièce à l'autre ;
- on peut utiliser une technologie de courants porteurs ; cette technologie est cependant coûteuse à mettre en oeuvre, et on n'a pas une garantie totale que la communication ne puisse pas s'effectuer entre des décodeurs disposés dans des maisons voisines ;
- on peut utiliser les ondes radio ; là encore on n'a pas une garantie totale que la communication ne puisse pas s'effectuer entre des décodeurs disposés dans des maisons voisines ;
- on peut utiliser les lignes téléphoniques ; cependant, cela contraint l'utilisateur à disposer ses décodeurs à proximité de prises téléphoniques, ce qui n'est que rarement possible au regard de la conception des habitations.

L'utilisation du câble RF apporte une garantie que les messages transmis du décodeur maître vers le décodeur esclave ne sortiront pas du cadre de l'habitation, et présente par ailleurs l'avantage d'un faible coût d'adaptation des décodeurs pour la mise en oeuvre du procédé selon l'invention. Par ailleurs, l'utilisation du câble RF permet d'utiliser, pour transmettre des messages depuis le décodeur maître vers les décodeurs esclaves, les protocoles qui sont définis pour les systèmes de contrôle des équipements périphériques dans le cadre des réceptions satellites et qui sont présents dans certains décodeurs. Un tel système est par exemple le DiSEqC (marque déposée) (pour Digital Satellite Equipment Control en anglais) qui permet de commander un certain nombre d'équipements (tête de réception de la parabole, moteur, coupleurs, commutateurs....) directement par le câble RF. La figure 2 illustre donc la transmission régulière, par les câbles RF 102 et 102', d'un message d'autorisation MESS.AUTO depuis le décodeur maître 100 vers le décodeur esclave 100'.

Qu'elle s'appuie sur des protocoles existant ou non, la transmission des messages d'autorisation s'effectue dans des bandes de fréquence non utilisées pour la réception du flux de signaux de télévision.

On se réfère à présent essentiellement à la figure 3. L'organigramme qui y est représenté comporte une première étape 300 consistant en l'installation d'un décodeur esclave. Par installation, on désigne ici l'ensemble des opérations de raccordement au secteur, aux moyens de réception 103, et tout autre branchement du décodeur esclave. Une fois convenablement connecté, le décodeur esclave peut, dans une étape 301, être mis dans un état actif, à opposer à un état de veille dans lequel le décodeur ne tente pas de réaliser d'opérations de décryptage.

Une étape de décision 302 intervient alors, étape dans laquelle l'utilisateur indique s'il s'agit d'une première utilisation du décodeur esclave. Si c'est le cas, l'utilisateur a la possibilité d'accéder à un menu qui s'affiche sur l'écran de son téléviseur; simultanément, l'utilisateur affiche un menu similaire sur un deuxième écran associé au décodeur maître. L'apparition de ces menus, qui, dans un mode de mise en oeuvre particulier peut être limitée à la seule première utilisation du décodeur esclave, permet de paramétrer, dans une étape 303, un ensemble de fonctionnalités du décodeur esclave, et également de procéder, dans une étape 304, à une opération d'association, ou pairing, entre le décodeur maître et le décodeur esclave. Cette opération de pairing sera détaillée ultérieurement dans les différentes variantes qui peuvent être envisagées dans l'invention. Dans tous les cas envisagés, l'opération de pairing aboutit à la mémorisation, dans une zone particulière 203 de la mémoire de données 107, respectivement 200' de la mémoire de données 107', d'une clé de chiffrement K, respectivement d'une clé de déchiffrement K'.

La clé de déchiffrement K' permet de déchiffrer l'ensemble des messages chiffrés au moyen de la clé de chiffrement K. Ces clés peuvent notamment être utilisées pour que le message d'autorisation MESS.AUTO soit transmis de façon cryptée du décodeur maître vers chaque décodeur esclave destinataire. Ces clés, en fonction des algorithmes de cryptage utilisés, sont différentes ou identiques et seuls les décodeurs esclaves pourvus de la bonne clé de déchiffrement K' peuvent décoder le message d'autorisation codé au moyen de la clé de chiffrement K, et l'interpréter comme tel.

A partir du moment où le décodeur maître 100' est associé avec un ou plusieurs décodeurs esclaves, il élabore seul et transmet régulièrement les messages d'autorisation d'accès MESS.AUTO au moyen d'une application 210 de la mémoire de programmes 106, dite application de calcul du message d'autorisation. Afin d'atteindre un niveau de sécurité optimal, en plus du cryptage au moyen de la clé de chiffrement K, le message d'autorisation élaboré comporte une information relative au moment où il est transmis, par exemple la date et l'heure de sa transmission. La régularité de la transmission du message d'autorisation est définie par une variable 204 de la mémoire de données 107 ; quand cette variable adopte une valeur constante, l'émission du message d'autorisation est périodique, par exemple de période égale à cinq minutes.

Après l'opération de pairing, on effectue une opération 305 de première mémorisation, dans une zone particulière 201' de la mémoire de données 107' du décodeur esclave, d'un état d'autorisation d'accès à des services de télévision. Par défaut, à l'issue de l'opération de pairing 304, l'accès est autorisé.

A l'issue de l'étape 305, ou à l'issue de l'étape 302 lorsque le décodeur n'est pas mis dans un état actif pour la première fois, on procède, dans une étape 306, à une opération de lecture de l'état d'autorisation d'accès aux services de télévision. Les opérations de lecture/écriture de l'état d'autorisation d'accès sont effectuées au moyen d'une application 212' de la mémoire de programmes 106'. Cette étape de lecture est suivie d'une étape de décision 307 suite à laquelle le décodeur esclave est mis, dans une étape 308, dans un état de blocage lorsque l'accès aux services de télévision est mémorisé comme refusé ; le fonctionnement de l'étape de blocage 308, comme celui des autres étapes de blocage pouvant intervenir, sera détaillé par la suite.

A l'issue de l'étape 308, ou de l'étape de décision 307 lorsque l'accès aux services de télévision est mémorisé comme autorisé, on procède, dans une étape 309, au déclenchement d'un compte à rebours, ou timer, au moyen d'une application 213' de la mémoire de programmes 106'. Il s'agit là d'une étape essentielle du procédé selon l'invention. En effet, à partir du moment où le timer est déclenché, le décodeur esclave est en attente d'un message d'autorisation qui doit être transmis par le décodeur maître. Une étape de décision 310 illustre cette attente.

Si le compte à rebours est achevé, c'est à dire si une durée dite durée d'autonomie, mémorisée dans une zone particulière 202' de la mémoire de données 107' du décodeur esclave, est écoulée depuis le déclenchement du compte à rebours, et si aucun message d'autorisation adéquat n'est parvenu au décodeur esclave, ce dernier est mis dans un état de blocage dans une étape 311 ; l'état d'autorisation d'accès aux services de télévision pour lesquels le décodeur esclave a acquis les droits est alors mémorisé comme refusé, dans une étape 312, dans la zone de mémoire réservée à cet effet. A l'inverse, si la durée d'autonomie du décodeur esclave n'est pas arrivée à son terme lors de la réception d'un message d'autorisation approprié de la part du décodeur maître, l'état d'accès aux services de télévision pour lesquels le décodeur esclave a acquis les droits est mémorisé, dans une étape 313, comme autorisé dans la zone de mémoire 201' réservée à cet effet. Dans un mode de mise en oeuvre particulier de l'invention, la durée du compte à rebours est supérieure à deux fois un intervalle de temps minimal défini entre deux transmissions successives du message d'autorisation. Dans les deux cas, c'est à dire à l'issue de l'étape 312 ou à l'issue de l'étape 313, le procédé est repris à l'étape 309 où le compte à rebours est déclenché. L'on pourra également compter le nombre de sorties de veille réalisées depuis la dernière réception du message d'autorisation et faire passer l'état d'autorisation d'accès mémorisé dans l'état refusé, lorsque ce nombre dépassera une certaine valeur ( par exemple 5).

La mémorisation d'un état d'autorisation d'accès constitue un perfectionnement de l'invention qui permet d'éviter une fraude consistant à mettre en veille et à remettre dans un état actif, immédiatement après, un décodeur esclave qui n'aurait pas reçu dans les temps le message d'autorisation et dont les fonctionnalités de décryptage auraient été bloquées. En effet, si une telle information n'était pas mémorisée, chaque nouvelle mise en activité d'un décodeur esclave permettrait d'obtenir un flux de signaux décryptés pendant la totalité de la durée d'autonomie du décodeur esclave. Le fait de reprendre le procédé à l'étape 309 à l'issue des étapes 311 et 312 permet de limiter les conséquences d'une perturbation dans la transmission du message d'autorisation. Ainsi, dans le cas où la non réception du message d'autorisation relève d'un dysfonctionnement, le décodeur esclave licitement utilisé ne sera bloqué que jusqu'à la réception du message d'autorisation suivant.

A tout moment, l'étape de décision 310 peut être interrompue par l'utilisateur qui décide, dans une étape 314, de placer le décodeur esclave dans un état de veille. Le procédé selon l'invention est alors repris à l'étape 301 lorsque l'utilisateur replace le décodeur esclave dans un état actif.

Pour l'étape d'association 304, deux alternatives principales sont envisagées dans le procédé selon l'invention :

La première est dite pairing local. Dans cette alternative, le décodeur maître calcule, au moyen d'une application dite de calcul de chiffrement 211 de la mémoire de programmes 106, la clé de chiffrement K, par exemple de type AES, à partir d'aléas à sa disposition, tels que l'heure, le niveau de remplissage de ses mémoires tampons.... Après l'avoir mémorisée, il transmet à chaque décodeur esclave la clé de déchiffrement correspondante K', où elle est mémorisée de façon unique et irréversible, rendant ainsi définitivement impossible l'utilisation de ces décodeurs esclaves avec un autre décodeur maître.

La deuxième alternative est dite pairing centralisé. Dans cette alternative, l'opérateur de télévision émet des messages d'administration de droits de type EMM (Entitlement Management Message en anglais) spécifiques, destinés à un couple maître/esclave d'un même abonné, contenant les clés de chiffrement K et de déchiffrement K'. Le ou les messages EMM chiffrés portant les clés peuvent, par soucis de sécurité, comporter le numéro de série des décodeur maître et esclave.

Pour les étapes de blocage 308 et/ou 311, deux alternatives principales sont également envisagées dans le procédé selon l'invention :

La première alternative est appliquée lorsque les cartes de gestion des droits 114 et 114' sont identiques en terme de fonctionnement (pas nécessairement en terme de services auxquels elles donnent accès). Dans ce cas, une application de blocage 214' de la mémoire de programmes 106' est déclenchée dans les différentes étapes de blocage. Elle a pour effet d'empêcher la transmission des mots de décryptage depuis la carte de gestion de droits d'accès 114' vers le module de décryptage 111'.

Dans la deuxième alternative, les cartes de gestion des droits 114 et 114' ne sont pas identiques. On prévoit alors d'élaborer les messages d'autorisation du maître non plus dans sa mémoire de programme 106, mais dans sa carte de gestion des droits 114. Ce sont alors les cartes de gestion des droits 114' des décodeurs esclaves qui peuvent directement bloquer les opérations de décryptage. Dans cette deuxième alternative, on utilisera avantageusement le pairing centralisé, des EMM spécifiques transmettant, aux cartes de gestion des droits des décodeurs maîtres et esclaves, la clé commune dans le cas d'un chiffrement symétrique, ou les deux clés, dans le cas d'un chiffrement RSA.

Le décodeur maître devant envoyer périodiquement les messages d'autorisation d'accès pour permettre l'utilisation des décodeurs esclaves qui lui sont associés il pourra pour ce faire soit être maintenu actif en permanence, soit préférentiellement, se réveiller périodiquement.

## Revendications

1. Procédé d'accès à des services de télévision au moyen d'au moins un décodeur esclave (100'), ledit procédé comportant les différentes étapes consistant à :
- équiper une habitation au moyen d'un décodeur maître (100) et d'au moins un décodeur esclave (100');
- recevoir, via des moyens de réception (103) de l'habitation, un flux de signaux de télévision émis par un opérateur de télévision, le flux comportant notamment un ensemble de services de télévision ;
- déterminer pour le décodeur maître (100), un ensemble de droits d'accès à un premier ensemble autorisé de services de télévision;
- transmettre automatiquement et régulièrement, depuis le décodeur maître (100) vers chaque décodeur esclave (100'), un message d'autorisation d'accès (MESS.AUTO) à un deuxième ensemble autorisé de services de télévision, le dit message d'autorisation étant élaboré au moyen d'une application du décodeur maître (100) sans transmission préalable, par l'opérateur de télévision, d'un message spécifique déclenchant la transmission d'un tel message d'autorisation ;
- bloquer (311) une opération de décryptage du deuxième ensemble de services de télévision pour chaque décodeur esclave (100') actif n'ayant pas reçu de message approprié d'autorisation (MESS.AUTO) pendant une durée d'autonomie, préalablement déterminée, des décodeurs esclaves (100') , l'étape de blocage de l'opération de décryptage étant mise en oeuvre sans transmission préalable par l'opérateur de télévision d'un message spécifique déclenchant le blocage de l'opération de décryptage par chaque décodeur esclave (100') n'ayant pas reçu pendant sa durée d'autonomie le message d'autorisation (MESS.AUTO) ;
**caractérisé en ce que** le procédé comporte les différentes étapes supplémentaires consistant à :
- mémoriser (312 ; 313), avant chaque mise en veille (314) d'un des décodeurs esclaves (100'), un état d'autorisation d'accès du décodeur esclave (100' );
- à chaque nouveau positionnement dans un état actif (301) du décodeur esclave, placer (307) ledit décodeur esclave (100') dans un état d'autorisation d'accès correspondant à l'état d'autorisation d'accès mémorisé.

2. Procédé selon la revendication précédente **caractérisé en ce que** la transmission du message d'autorisation d'accès (MESS.AUTO) est périodique.

3. Procédé selon l'une au moins des revendications précédentes **caractérisé en ce que** la transmission du message d'autorisation d'accès (MESS.AUTO) est effectuée via un câble radio-fréquence (102 ; 102') reliant chaque décodeur (100 ;100') aux moyens de réception (103) de l'habitation.

4. Procédé selon la revendication précédente **caractérisé en ce que** la transmission du message d'autorisation d'accès (MESS.AUTO) est effectuée dans une bande de fréquence non utilisée pour la réception du flux de signaux de télévision.

5. Procédé selon l'une au moins des revendications 3 ou 4 **caractérisé en ce que** la transmission du message d'autorisation d'accès (MESS.AUTO) est effectuée selon un protocole défini pour les systèmes de contrôle des équipements périphériques dans le cadre des réceptions satellites.

6. Procédé selon l'une au moins des revendications 2 à 5 **caractérisé en ce que** la durée d'autonomie des décodeurs esclaves (100') est supérieure à deux fois la période de transmission du message d'autorisation (MESS.AUTO).

7. Procédé selon l'une au moins des revendications précédentes **caractérisé en ce qu'**il comporte l'étape supplémentaire consistant réaliser l'association (304) du décodeur maître (100) à chaque décodeur esclave (100') de l'habitation.

8. Procédé selon la revendication précédente **caractérisé en ce que** l'association entre le décodeur maître (100) et chaque décodeur esclave (100') de l'habitation est irréversible au moins sans intervention de l'opérateur ou du constructeur des décodeurs.

9. Procédé selon l'une au moins des revendications 7 ou 8 **caractérisé en ce que** l'étape supplémentaire (304) d'association du décodeur maître avec chaque décodeur esclave comporte les différentes opérations consistant à :
- calculer, dans le décodeur maître (100), une clé de chiffrement (K) à partir d'aléas disponibles au sein du décodeur maître (100);
- transmettre une clé de déchiffrement (K') associée à la clé de chiffrement (K) vers chaque décodeur esclave (100');
- mémoriser la clé de chiffrement (K), respectivement la clé de déchiffrement (K'), dans une mémoire du décodeur maître (100), respectivement dans une mémoire de chaque décodeur esclave (100').

10. Procédé selon la revendication précédente **caractérisé en ce que** l'opération de mémorisation de la clé de déchiffrement dans chaque décodeur esclave (100') est unique et irréversible.

11. Procédé selon l'une au moins des revendications 7 ou 8 **caractérisé en ce que** l'étape supplémentaire (304) d'association du décodeur maître avec chaque décodeur esclave comporte les différentes opérations consistant à :
- recevoir, dans le décodeur maître (100) et dans chaque décodeur esclave (100') de l'habitation, un ou plusieurs messages spécifiques, de type EMM, transportant une clé de chiffrement (K) et une clef de déchiffrement (k'),
- mémoriser la clé de chiffrement (K) dans une mémoire du décodeur maître (100) et la clef de déchiffrement (k') dans une mémoire de chaque décodeur esclave (100').

12. Procédé selon l'une au moins des revendications 9 à 11 **caractérisé en ce qu'**il comporte l'étape supplémentaire consistant à chiffrer, respectivement déchiffrer, au moyen de la clé de chiffrement (K), respectivement de déchiffrement (K'), mémorisée, les messages d'autorisation d'accès (MESS.AUTO) transmis, respectivement reçus, par le décodeur maître (100'), respectivement par chaque décodeur esclave (100').

13. Procédé selon la revendication précédente, **caractérisé en ce que** le message d'autorisation d'accès (MESS.AUTO) chiffré comporte une information relative à l'instant de leur envoi.

14. Procédé selon l'une au moins des revendications précédentes **caractérisé en ce que** l'étape de blocage (311) d'une opération de décryptage est effectuée au moyen d'une carte de gestion (114') des droits insérée dans chaque décodeur esclave (100').

## Claims

1. Method of access to television services through means of at least one slave decoder (100^{'}), said method comprising the different steps consisting of:
- equipping a habitation through means of a master decoder (100) and at least one slave decoder (100^{'});
- receiving, via the habitation's means of reception (103), a flow of television signals emitted by a television operator, the flow comprising in particular a group of television services;
- determining for the master decoder (100), a group of access rights to a first authorised group of television services;
- automatically and regularly transmitting, from the master decoder (100) to each slave decoder (100^{'}), an access authorisation message (MESS.AUTO) to a second authorised group of television services, the said authorisation message being constructed using the means of an application of the master decoder (100) without previous transmission, by the television operator, of a specific message triggering the transmission of such an authorisation message;
- blocking (311) a decrypting operation of the second group of television services for each active slave decoder (100^{'}) which has not received an appropriate authorisation message (MESS.AUTO) during a pre-determined period of autonomy, for the slave decoders (100^{'}), the step of blocking the decrypting operation being implemented without previous transmission by the television operator of a specific message triggering the blocking of the decrypting operation by each slave decoder (100) which has not received during its period of autonomy the authorisation message (MESS.AUTO);
**characterized in that** the method comprises the different additional steps consisting of:
- memorising (312; 313), before each switch to standby (314) of one of the slave decoders (100^{'}), a state of access authorisation of the slave decoder (100^{'});
- at each new positioning in an active state (301) of the slave decoder, placing (307) the said slave decoder (100^{'}) In a state of access authorisation corresponding to the memorised state of access authorisation.

2. A method according to the previous claim **characterized in that** the transmission of the access authorisation message (MESS.AUTO) is periodical,

3. A method according to at least one of the previous claims **characterized in that** the transmission of the access authorisation message (MESS.AUTO) is done via a radio-frequency cable (102; 102^{'}) linking each decoder (100; 100) to the habitation's means of reception 103.

4. A method according to the previous claim **characterized in that** the transmission of the access authorisation message (MESS.AUTO) is done through a channel frequency not used for receiving the flow of television signals.

5. A method according to at least one of claims 3 or 4 **characterized in that** the transmission of the access authorisation message (MESS.AUTO) is carried out according to a protocol defined for control systems of peripheral equipment for satellite receptions.

6. A method according to at least one of the claims 2 to 5 **characterized in that** the period of autonomy of the slave decoders (100') is greater than twice the transmission period of the access authorisation message (MESS.AUTO).

7. A method according to at least one of the previous claims **characterized in that** it comprises the additional step consisting of associating (304) the master decoder (100) to each of the habitation's slave decoders (100^{'}).

8. A method according to the previous claim **characterized in that** the association between the master decoder (100) and each of the habitation's slave decoders (100') is irreversible at least without the intervention of the operator or manufacturer of the decoders.

9. A method according to at least one of claims 7 or 8 **characterized in that** the additional step (304) of associating the master decoder to each of the slave decoders comprises the different operations consisting of:
- calculating, in the master decoder (100), a coding key (K) from available random numbers in the master decoder (100);
- transmitting a decoding key (K') associated with the coding key (K) to each slave decoder (100');
- memorising the coding key (K), respectively the decoding key (K^{'}), in a memory of the master decoder (100), respectively in a memory of each slave decoder (100^{'}).

10. A method according to the previous claim **characterized in that** the operation of memorising the decoding key in each slave decoder (100^{'}) is unique and irreversible.

11. A method according to at least one of claims 7 or 8 **characterized in that** the additional step (304) of associating the master decoder to each of the slave decoders comprises the different operations consisting of:
- receiving, in the master decoder (100) and in each of the habitation's slave decoders (100^{'}), one or several specific messages, of EMM type, carrying a coding key (K) and a decoding key (k^{'});
- memorising the coding key (K), in a memory of the master decoder (100), and the decoding key (k) in a memory of each slave decoder (100^{'}).

12. A method according to at least one of claims 9 to 11 **characterized in that** it comprises the additional step consisting of coding, respectively decoding, by the means of the memorised coding key (K), respectively the memorised decoding key (K^{'}), the access authorisation messages (MESS.AUTO) transmitted, respectively received, by the master decoder (100^{'}), respectively by each slave decoder (100^{'}).

13. A method according to the previous claim **characterized in that** the coded access authorisation message (MESS.AUTO) comprises information relating to its moment of transmission.

14. A method according to at least one of the previous claims **characterized in that** the step of blocking (311) a decoding operation is carried out by means of a rights management card (114) inserted in each slave decoder (100^{'}).

## Patentansprüche

1. Verfahren für den Zugriff auf Fernsehdienste mittels zumindest eines Slavedecoders (100'), wobei das besagte Verfahren die verschiedenen Schritte enthält, die darin bestehen:
- eine Wohnung mit einem Masterdecoder (100) und zumindest einem Slavedecoder (100') auszustatten;
- über die Empfangsvorrichtungen (103) der Wohnung einen Fluss an Fernsehsignalen zu empfangen, die von einem Fernsehbetreiber gesendet werden, wobei der Fluss im Speziellen eine Reihe von Fernsehdiensten enthält;
- für den Masterdecoder (100) eine Reihe von Zugriffsrechten zu einer ersten freigegebenen Reihe an Fernsehdiensten festzulegen;
- automatisch und in regelmäßigen Abständen vom Masterdecoder (100) eine Freigabenachricht (MESS.AUTO) für den Zugriff auf eine zweite freigegebene Reihe an Fernsehdiensten zu jedem der Slavedecoder (100') zu übertragen, wobei die besagte Freigabenachricht mithilfe einer Anwendung des Masterdecoders (100) ausgearbeitet wird, ohne vorherige Übermittlung einer Sondernachricht durch den Fernsehbetreiber, die die Übermittlung einer solchen Freigabenachricht auslöst;
- einen Entschlüsselungsvorgang der zweiten Reihe an Fernsehdiensten für jeden aktiven Slavedecoder (100') zu blockieren, der die entsprechende Freigabenachricht (MESS.AUTO) innerhalb eines zuvor festgelegten Autonomiezeitraums der Slavedecoder (100') nicht erhalten hat, wobei der Blockadeschritt des Entschlüsselungsvorgangs angewandt wird, ohne dass der Fernsehbetreiber zuvor eine Sondernachricht zum Auslösen der Blockade des Entschlüsselungsvorgangs durch jeden Slavedecoder (100') geschickt hätte, der die Freigabenachricht (MESS.AUTO) während seines Autonomiezeitraums nicht erhalten hat;
**dadurch gekennzeichnet, dass** das Verfahren die verschiedenen Zusatzschritte enthält, die darin bestehen:
- vor jedem Umschalten in den Stand-by Betrieb (314) eines der Slavedecoder (100') einen Freigabestatus für den Zugriff des Slavedecoders (100') abzuspeichern (312; 313);
- den besagten Slavedecoder (100') bei jedem neuen Umschalten in einen aktiven Status (301) des Slavedecoders in einen Freigabestatus für den entsprechenden Zugriff auf den gespeicherten Zugriffsfreigabestatus zu versetzen (307).

2. Verfahren nach dem vorherigen Anspruch, **dadurch gekennzeichnet, dass** die Übermittlung der Freigabenachricht (MESS.AUTO) periodisch erfolgt.

3. Verfahren nach zumindest einem der vorherigen Ansprüche, **dadurch gekennzeichnet, dass** die Übermittlung der Freigabenachricht (MESS.AUTO) über ein Radiofrequenzkabel (102; 102') erfolgt, dass jeden Decoder (100; 100') mit den Empfangsvorrichtungen (103) der Wohnung verbindet.

4. Verfahren nach dem vorherigen Anspruch, **dadurch gekennzeichnet, dass** die Übermittlung der Freigabenachricht (MESS.AUTO) innerhalb einer Frequenzbandbreite erfolgt, die nicht für den Empfang des Fernsehsignalflusses verwendet wird.

5. Verfahren nach zumindest einem der Ansprüche 3 oder 4, **dadurch gekennzeichnet, dass** die Übermittlung der Freigabenachricht (MESS.AUTO) nach einem Protokoll erfolgt, das für Prüfsysteme für Peripherieausrüstungen im Rahmen des Satellitenempfangs definiert wird.

6. Verfahren nach zumindest einem der Ansprüche 2 bis 5, **dadurch gekennzeichnet, dass** der Autonomiezeitraum der Slavedecoder (100') größe als die doppelte Übertragungszeit der Freigabenachricht (MESS.AUTO) ist.

7. Verfahren nach zumindest einem der vorherigen Ansprüche, **dadurch gekennzeichnet, dass** es den Zusatzschritt enthält, der darin besteht, eine Zuordnung (304) zwischen dem Masterdecoder (100) und jedem der Slavedecoder (100') der Wohnung vorzunehmen.

8. Verfahren nach dem vorherigen Anspruch, **dadurch gekennzeichnet, dass** die Zuordnung zwischen dem Masterdecoder (100) und jedem der Slavedecoder (100') der Wohnung zumindest ohne Eingriff des Betreibers oder des Herstellers der Decoder irreversibel ist.

9. Verfahren nach zumindest einem der Ansprüche 7 oder 8, **dadurch gekennzeichnet, dass** der Zusatzschritt (304) für die Zuordnung zwischen dem Masterdecoder und jedem der Slavedecoder verschiedene Vorgänge enthält, die darin bestehen:
- Im Masterdecoder (100) einen Chiffrierschlüssel (K) basierend auf den im Masterdecoder (100) vorhandenen Zufälligkeiten zu errechnen;
- jedem Slavedecoder (100') einen Dechiffrierschlüssel (K') zu übermitteln, der dem Chiffrierschlüssel (K) zugeordnet ist;
- den Chiffrierschlüssel (K) beziehungsweise den Dechiffrierschlüssel (K') in einem Speicher des Masterdecoders (100) beziehungsweise in einem Speicher jedes Slavedecoders (100') abzuspeichern;

10. Verfahren nach dem vorherigen Anspruch, **dadurch gekennzeichnet, dass** der Vorgang des Abspeicherns des Dechiffrierschlüssels in jedem Slavedecoder (100') einzigartig und irreversibel ist.

11. Verfahren nach zumindest einem der Ansprüche 7 oder 8, **dadurch gekennzeichnet, dass** der Zusatzschritt (304) für die Zuordnung zwischen dem Masterdecoder und jedem der Slavedecoder verschiedene Vorgänge enthält, die darin bestehen:
- im Masterdecoder (100) und in jedem Slavedecoder (100') der Wohnung eine oder mehrere Sondernachrichten vom Typ EMM zu empfangen, die einen Chiffrierschlüssel (K) und einen Dechiffrierschlüssel (K') mitführt;
- den Chiffrierschlüssel (K) in einem Speicher des Masterdecoders (100) und den Dechiffrierschlüssel (K') in einem Speicher jedes Slavedecoders (100') abzuspeichern;

12. Verfahren nach zumindest einem der Ansprüche 9 bis 11, **dadurch gekennzeichnet, dass** es den Zusatzschritt enthält, der darin besteht, die Freigabenachrichten (MESS.AUTO) mit dem gespeicherten Chiffrierschlüssel (K) beziehungsweise dem gespeicherten Dechiffrierschlüssel (K') zu chiffrieren oder zu dechiffrieren, die vom Masterdecoder (100) beziehungsweise von jedem Slavedecoder (100') übermitteltet beziehungsweise empfangen werden.

13. Verfahren nach dem vorherigen Anspruch, **dadurch gekennzeichnet, dass** die chiffrierte Freigabenachricht für den Zugriff (MESS.AUTO) eine Information in Bezug auf den Moment ihrer Versendung enthält.

14. Verfahren nach zumindest einem der vorherigen Ansprüche, **dadurch gekennzeichnet, dass** der Blockadeschritt (311) eines Entschlüsselungsvorgangs mithilfe einer Karte zur Verwaltung (114') der Rechte erfolgt, die in jeden Slavedecoder (100') eingeführt wird.
